# EUROPEAN PATENT SPECIFICATION

(11) **EP 2 170 507 B1**
(45) Date of publication and mention of the grant of the patent: **10.05.2017**
(21) Application number: 08787714.8
(22) Date of filing: 22.07.2008
(51) Int. Cl.: B01J 23/648, B01J 23/64, B01D 53/86, B01D 53/94

(54) **CATALYST FOR REMOVING DETRIMENTAL HYDROCARBONS PRESENT IN EFFLUENT OR PROCESS GASES**
KATALYSATOR ZUR ENTFERNUNG VON IN EFFLUENZ- ODER PROZESSGASEN ENTHALTENEN SCHÄDLICHEN KOHLENWASSERSTOFFEN
CATALYSEUR POUR L'ELIMINATION D'HYDROCARBURES NUISIBLES PRESENTS DANS DES GAZ DE DECHARGE ET DE TRAITEMENT

(30) Priority: 23.07.2007 FI 20070564
(43) Date of publication of application: 07.04.2010
(73) Proprietor: Dinex Ecocat Oy, 41331 Vihtavuori (FI)
(72) Inventor: HÄRKÖNEN, Matti, FI-90570 Oulu (FI); MAUNULA, Teuvo, FI-90230 Oulu (FI); SAARTOALA, Jukka, FI-90650 Oulu (FI)
(74) Representative: Berggren Oy, Helsinki & Oulu
(86) International application number: PCT/FI2008/050441
(87) International publication number: WO 2009/013394

(56) References cited:
- EP-A1- 0 514 682
- WO-A2-2006/134403
- DE-A1- 2 245 607
- DE-A1- 3 804 722
- DE-A1-102004 058 780
- GB-A- 1 424 382
- JP-A- 61 120 640
- JP-A- 2007 117 911
- US-A- 4 110 254
- US-A- 4 711 870
- US-A- 5 283 041
- US-A1- 2004 224 840

## Description

### Technical background

The present invention relates to a catalyst for removing detrimental halogenated or non-halogenated hydrocarbons present in different effluent or process gases as non-detrimental compounds. The invention also relates to a method for the manufacture and use of such a catalyst.

Hydrocarbons (HC) are used as reactants, solvents, or they are generated in some processes, burning processes or under other conditions. The detrimental hydrocarbon compounds present in effluent gases are also called VOC (volatile organic compounds), which thus are gaseous in common environmental or process conditions. VOC emissions are detrimental to health and they cause local odour nuisances, because many compounds have a low odour threshold. Hydrocarbons react together with nitrogen oxides and form so-called photochemical mist by the action of the sun. Due to these reasons it is not allowed to let significant amounts of these compounds to escape from the processes together with effluent gases, and the authorities have set highest allowed concentrations or total emission amounts for the emissions.

Halogenated (chloro, bromic, fluoric and iodine HCs) hydrocarbons (H-HC) are often known to be more harmful to organisms and plants than other hydrocarbons or oxidised hydrocarbons. Also the abbreviation C-VOC is used of chlorinated hydrocarbons. Some compounds (dioxines and polycyclic aromatic compounds) are known to be carcinogenic already in low concentrations with a short exposure. These compounds are detrimental also because their biological degradation is very slow so that compounds accumulated in the body do not vanish in a natural way. Halogenated hydrocarbons also contribute to the thinning of the ozone layer surrounding the earth.

Thermal burning, absorption/adsorption methods, membranes, condensation, biological methods and catalytic burning have been used as methods for removing VOCs from gases or fluids. If hydrocarbon compounds are burned thermally in very high temperatures, it is possible to convert the major part of the detrimental compounds into water, carbon dioxide and possibly into respective hydrogen halides. However, significant amounts of detrimental nitrogen oxides (NO_{X}) are generated in high temperatures.

Halogenated hydrocarbons require especially high temperatures, because they are stabile and no detrimental compounds must remain of them to the escaping gas. Residues that have to be processed are generated in the absorption and adsorption methods. E.g. activated carbon and zeolites have been used as adsorption materials, which suit well for the removal of very small amounts from effluent gases. Oxidation of detrimental compounds can be achieved also by using e.g. plasma or UV techniques. Catalytic burning methods have gained popularity, because they will produce no residue or nitrogen oxides because of the low temperature. The use of catalysts in the burning makes possible a low operation temperature (200-500 °C) so that no nitrogen oxides will be generated, but the removal efficiency of VOC and H-HC compounds is very high.

Noble metal (Pt, Pd) or base metal catalysts (Cr, Mn, Co, Ni, Fe, V) have been used for the burning of hydrocarbons and halogenated hydrocarbons in a metallic or oxidised form (Dissanayake 2006, Chemical Industries 2006 108(Metal oxides), 543). These metals are able to change their oxidation status in the reaction, which is essential in the catalytic oxidation of VOCs. Metal oxides are reduced by hydrocarbons and oxidised back by oxygen in the gas. E.g. aluminium oxide has been used as the support material for these active components. Noble metals on the surface of boric nitride also operate actively in the removal of VOC compounds (US Patent 2003/0078156).

Very good durability is required of catalysts used for the removal of halogenated hydrocarbons, because reactants and reaction products are corroding and the generating metal halogens (chlorides) deactivate catalysts. Most of the common VOC catalysts (Pt or Pd on the surface of TiO₂ Al₂O₃ or SiO₂ lose especially activeness of low temperature in the presence of H-HCs (Sinquin et al. 2000, Appl. Catal. 27(2000) 105). Most durable C₁-C-VOC catalysts are V, Cr, Mn, Fe, Co, Ni and Cu. Perovskites (e.g. LaCoO₃ or LaMnO₃₊ₓ) have also been used for the catalytic removal of C-VOC compounds. H-HCs have been removed by using La, Ce, Zr or Pr stabilised alumina or other oxide support material, to which a compound comprising noble metal and sulphur, such as Pt sulphide, sulphuric acid, ammonium sulphate, titanium oxide sulphate, titanium sulphate or zirconium sulphate (US 2004/0028589) has been added. It was possible to efficiently remove H-HC and other HC compounds by using a catalyst with zirconium oxide and noble metal as well as Mn, Ce and/or Co oxide together with V oxides (US 5,283,041). With a chromium comprising catalyst it has been possible to reach a good removal efficiency of H-HC compounds (US 5,635,438, 1994). It was essential to calcine the catalyst within the temperature range of 725-1100 °C. Cr-Cu/ZSM-5 catalysts have also been used for removing chlorinated hydrocarbons (J. Hazardous Mat. B129(2006 39). C-VOC catalysts have been stabilised by pre-processing them with halide compounds (US 2001/0016555). A method has also been developed for the removal of HC and H-HC compounds, in which non-halogen compounds react in a first catalyst in a support material of low acidity and halogenated hydrocarbons in a second catalyst in a support material of high acidity (US 5,643,545, 1995). Even though development work has been done, the temperature of the catalyst has to be usually raised in H-HC subjects during use in order to be able to retain the desired level of conversion. Raising the temperature will again lead to an increase in the consumption of energy and thermal deactivation.

GB 1424382 A discloses a catalytic composition comprising oxides of vanadium, palladium and chromium for treating exhaust gases containing carbon monoxide, hydrocarbons and nitrogen oxides.

US 4711870 A discloses an exhaust gas purification catalyst comprising copper, vanadium, at least one member selected from the group consisting of platinum, palladium, rhodium and compounds thereof and additionally nickel, iron, manganese or chromium, supported on a porous ceramic body.

DE 102004058780 A1 discloses a catalyst comprising an alloy of cobalt and another metal for oxidizing carbon-containing particles.

A catalyst for exhaust gas purification containing oxide mixtures with platinum group metals is disclosed in DE 2245607 A1.

US 5283041 A discloses a catalyst for treating gas streams containing organic compounds such as halogenated organic compounds. The catalyst comprises manganese oxide, zirconium oxide and vanadium oxide, as well as one or more platinum group metals.

EP 0514682 A1 discloses a metal oxide catalyst comprising Ti and/or Zr oxide, V and/or Nb oxide, Mo, W and/or Cr oxide and an alkaline earth metal sulphate.

US 2004/224840 A1 discloses a catalyst comprising vanadium and at least one of 6A metals selected from a group consisting of Mo, W and Cr for removing aromatic halogenated compounds.

An exhaust gas purification catalyst having a metal oxide composition of [La][Cu_{0.30}V_{0.20}CO_{0.45}Pt_{0.05}]O₃ is disclosed in US 4110254 A.

JP 61120640 A discloses a catalyst comprising a composition mixture of platinum, rhodium, vanadium oxide and a transition metal such as Cr, Mn, Fe, Co, Ni or W, for purifying carbon monoxide and gaseous hydrocarbon in diesel exhaust gas.

### General description

There has now been invented a catalyst suitable for the removal of halogenated and non-halogenated hydrocarbons in effluent and process gases.

To achieve this object the invention is characterised in what is claimed in the independent patent claims. The other patent claims show some advantageous embodiments of the invention.

The invention is based on that a fluid mixture comprising hydrocarbons is directed to a catalyst according to the invention, in which halogenated and non-halogenated hydrocarbons react as non-detrimental or less detrimental compounds.

An aspect of the invention is a catalyst for removal of halogenated and non-halogenated hydrocarbons in effluent and process gases said catalyst comprising a porous support material which is aluminium, silicon, titanium or zirconium oxide or zeolite or a mixture of these and the amount of support material is 10 - 600 g/dm³_{catalyst structure}. The invention is characterised in that on the surface of which support material there are:
- one or several noble metals chosen from the group of Pt, Pd, Rh, Ru and/or Ir having total concentration 0.5 - 3%, in the support material; and
- V having total concentration 1 - 5% in the support material; and
- one 1. additive, which is Cr having total concentration in the support material 0.1 - 2%; and
- one 2. additive, which is W, Mo, Nb and Hf having total concentration in the support material 1 - 35%.

According to the invention the support material is aluminium, silicon, titanium or zirconium oxide or zeolite, or a mixture of these.

According to the invention the noble metal on the surface of the porous support material is Pt, Pd, Rh, Ru and/or Ir.

According to the invention the amount of the support material is 10 - 600 g/dm³_{catalyst structure}.

According to the invention the total concentration of noble metals is 0.5 - 3% in the support material.

According to the invention the support material has 1 - 5% of vanadium.

According to the invention the total concentration of the 1. additive in the support material is 0.1 - 2%.

According to an object of the invention the support material preferably has 0.1 - 1% of chromium as the 1. additive.

According to the invention the support material also has one or several 2. additive, which is W.

thThe total concentration of the 2. additive is 1 - 35%.

A composition (not according to the invention), is described here and has no vanadium but a second additive, preferably tungsten, and optionally noble metal and/or 1. additive (preferably Cr and/or Fe). The amount of W in the support material is preferably 5 - 25%, as oxide approximately 6 - 32%. The support material preferably comprises TiO₂. Excluding the vanadium is of advantage especially e.g. in the manufacture and also the use of the catalyst.

According to an object of the invention the catalyst structure is a honeycombed structure or structure for mixing made of metal, ceramics, the catalyst material itself or a mixture of these and consisting of straight or tortuous flow channels, such as preferably a metallic structure or structure for mixing consisting of straight or tortuous flow channels.

According to an object of the invention the catalyst has been added to a catalyst structure, in which channels have been arranged between the walls, the hydraulic diameter of the channels or the average distance of the walls from each other is 0.1 - 20mm, preferably 0.5 - 2mm.

According to an object of the invention noble metal/noble metals are added to the support material before the adding of V, and the 1. additive is added to the support material after the adding of V.

According to an object of the invention the catalyst structure is a honeycombed structure or structure for mixing made of metal, ceramics, the catalyst material itself or a mixture of these and consisting of straight or tortuous flow channels, preferably a metallic structure or structure for mixing consisting of straight or tortuous flow channels.

The catalyst and method of the invention can be constructed in different ways in accordance with the object and objectives. The system can have one or several catalysts according to the invention or a combination of these. The catalyst of the invention can also be combined with one or several conventional or known VOC catalysts. In addition, the system can have one or several heat exchangers, with which it is possible to recover the reaction heat and to circulate it in the reactor, for example, by using a reverse flow reactor.

According to an object of the invention the catalyst is used in a unidirectional or reverse flow reactor.

According to an object of the invention more than one heat exchanger structures are used with the catalyst.

According to an object of the invention more than one heat exchanger structures and reverse flow reactors are used with the catalyst.

According to an object of the invention other types of catalysts are used with the catalyst, for example for catalysing the oxidation of hydrocarbons.

According to an object of the invention one or several catalysts are used with the catalyst, comprising at most 0.5% of vanadium and/or at most 0.5% of the 1. and 2. additive of the invention.

According to an object of the invention water, vapour, air or oxygen is fed to the reactor.

According to an object of the invention it is connected to be used with other removal methods, such as thermal, adsorption or absorption methods in the same or separate units. For example, the forming HCl or other halide compounds can be removed by using absorption methods, such as washers.

According to an object of the invention the catalyst is used for cleaning effluent gases comprising sulphur or nitrogen compounds and/or hydrocarbon compounds.

In a reverse flow reactor the system can be such that there are heat exchangers on both sides of the catalysts of the invention. The reverse flow reactor can be used for utilising reaction heat, and the reactor operates without additional heating with a relatively small amount of emissions, from the reaction of which reaction heat is generated more than the loss of energy. Conventional honeycombed heat exchanger structures (e.g. pipe or plate heat exchangers) are used in the heat exchangers, which last in the conditions of use. Some conventional heat transfer mediums (air, water, and other fluids/gases) can be used in the heat exchangers, which can be circulated between two different reactor parts. The heat transfer medium flows in a different channel system from the fluid to be processed. Additional heat can be imported to the heat exchangers or heat can be exported (cooling). In the heat exchangers, fluids can be in different channels in relation to each other in a cross, forward or counter current. Especially honeycombed structures can be made of metal foil, and the channel form consists of straight and cockled foil/plate or two cockled foil/plate structures. Also a combination of one or several reverse flow reactors and normal unidirectional pipe reactors can be used in the method so that one unit can be arranged after the reverse flow reactor. By using a combination of several reverse flow reactors it is possible to maintain different temperatures in different reactors and thus to optimise the operating windows and energy balances of the system. A combination of several reactors, whose modes of operation or conditions deviate from each other, can be used also in subjects where it is desired, for example, to remove also hydrocarbons and their derivatives simultaneously with halogenated hydrocarbons. Additional heat can be imported by electric or burner heating or fuel supply. An H-VOC catalyst also functions as an effective burning catalyst, with which the temperature of the system can be raised if a small amount of burning fuel is fed to the fluid. One unit or several units can be heated or cooled externally. Also other intermediate agents (compounds comprising oxygen or reducing compounds) or auxiliary energy (e.g. plasma for oxidation) can be used for promoting the reactions. The outcoming fluid can be led to some other cleaning unit, for example an adsorption or absorption unit, with which e.g. generated light halogen compounds (nitrogen halides) can be removed.

The catalyst described here can be used in a method, in which a reactant (oxygen, air) is also fed to a pipeline e.g. in situations when necessary conditions cannot be otherwise created. Oxygen can be fed to effluent gases to mixtures comprising a too small amount of oxygen to remove hydrocarbon compounds. The catalyst can also be used in objects comprising a low amount of oxygen so that it is also possible to use the catalyst first for a fluid comprising too little oxygen and then for a fluid comprising an excessive amount of oxygen. The mixture is converted between the catalyst units to comprise an excessive amount of oxygen by feeding to it additional air or oxygen.

Fields of application for the invention are effluent gas applications in objects in which the mixture comprises halogenated hydrocarbons and (excessively) oxygen. The fluid can thus also be liquid-based or a mixture of liquids and gases. Catalysts described here can also be used for cleaning hydrocarbon compounds comprising nitrogen, sulphur or oxygen. Sulphur and nitrogen compounds can also be other than hydrocarbon derivatives such as SOₓ, H₂S, COS, NOₓ, NH₃, HCN or other respective compounds. In the cleaning of effluent gases generated in the burning of sulphur-comprising fuels (e.g. diesel, coal, biofuels) the catalyst described here can be used to withstand sulphur poisoning and to prevent the formation of sulphates, which adds the number of measurable particulate matter (PM). Such objects are, for example, moving vehicles and means of transportation (cars, trains, and ships) or stationary power plants or equipment. As disclosed here (not according to the invention) it is possible to exclude the 1. and/or 2. promoter and/or vanadium from the composition. In these objects also the noble metal charge has to be kept generally moderate (approximately 0.35 - 1.1 g/L Pt) so that too many sulphates would not be formed. Moderate Pt charges can thus be used with the additives of the invention, which are needed to guarantee a long-lasting CO and HC operation. With conventional oxidation catalysts the Pt charge has to be even below 0.04 g/L in order to avoid detrimental amounts of forming sulphates.

The catalyst compositions of the invention have been coated by spraying a coating slurry separately onto a smooth and cockled open metal foil or surface. After the coating the catalysts have been dried and calcined. Alternatively the catalyst coatings have been coated by dipping or immersing a finished, usually honeycombed metallic or ceramic catalyst structure in catalyst slurry. Also a combination of these manufacturing methods can have been used in the manufacture.

Active metals and promoters have already been added to the slurry or they have been absorbed into a coated catalyst. The coating and active components can also be added by different methods from gaseous or solid starting materials.

The catalyst coating of the invention can be pre- or post-coated to normal ceramic or metallic cells or structures, in which the aperture form (e.g. square, triangle), aperture density (10 - 2000 cpsi, apertures/square inch ∼ 1 - 200 apertures/cm²) or wall thickness (10 - 2000 µm) can vary within a large range, depending on the object of use. When the effluent gas comprises large amounts of particles or impurities, very large channel sizes can be used in the catalyst (< 100 cpsi). In objects with very little particles very small channel sizes (e.g. > 500 cpsi) can be used in the cell. A typical aperture number is between 300 - 600 cpsi. These variable values can vary also in the same cell or in subsequent cells so that benefits will be gained e.g. because of efficient mixing, low pressure loss or mechanical strength. Catalyst structures can be realised by using pellet-type, extruded or powdery catalysts.

The cell to be coated can also form a sort of a static mixing structure, either with mixing zones (e.g. bends, flow barriers or restrictions) in separate channels, or the structure has been formed by inserting cockled undulated foils or plates superimposed so that the direction of the wave crest deviates from the incoming direction of the gas and that the wave crests of the superimposed plates are divergent. In a common metal cell the wave crests of the cockled foil are parallel in relation to each other and to the main flow direction. The mixing efficiency can be adjusted by varying the angle between the wave crest and the main flow direction, which is usually 10 - 45°, preferably 10 - 20°. By using a small angle it is possible to make the crests to bear, but the counter pressure will not rise too high. In static mixers used purely for mixing the angle can be approximately 45° and the channel size can be big (cockle height > 10 mm) so that the flow in the channel can be made very turbulent. However, an optimum for the catalyst structure is a structure, in which the channel size is small (cockle height approximately 1 mm) so that there is a lot of geometric surface for the catalyst coating. The angle in the catalyst structure has to be small so that the counter pressure can remain low. The mixing structure can also be produced by folding the cockled foil superimposed alternately back-and-forth so that the wave crests of the cockle bear against each other, and a mixing structure is formed. With the mixing structure, mixing of the flow in the radial direction of the pipe can be achieved, and it has no actual separate channels. The mixing structure can also achieve for the particles collecting efficiencies that are higher than the normal cell structure. The shape of the catalysts and flow channels can be round, elliptical, square, angular, or a combination of these. Insulation material and/or heat transfer structures/equipment may be arranged around or inside the reactor. The structure to be coated can be or instead of the metal foil it is also possible to use partly or entirely metal mesh, sintered porous metal, fibre, or a particle catch.

The catalyst described here can also be coated onto two or several catalyst structures sequential or parallel in the flow direction. Catalyst structures of different or same sizes can be located in the same catalyst converter or they can be arranged in separate converters so that there is a necessary amount of pipes between them. The catalysts' compositions described here, noble metal charges (e.g. Pt), aperture numbers (geometrical areas) or structures can be similar to or different from each other.

### Detailed description

Some embodiments of the invention will be explained next in more detail, referring to the enclosed tables, in which
Table 1 illustrates cell catalysts used in activeness tests,
Table 2 illustrates gas compositions used in a laboratory simulation,
Table 3 illustrates activeness test results.

### Manufacture of catalysts described in the examples:

Slurry was manufactured of catalyst raw materials, to which active agents and binding agents were added, the purpose of which was to ensure adhesion and cohesion on the surface of the support structure. Al and Ti sols were used as binding agent. A smooth and cockled metal foil with a thickness of 50 µm was coated with the prepared slurry; the samples were dried in approximately 110 °C and calcined for 4 hours in 550 °C. A desired amount of Pt, Pd, Rh, Cr and V was absorbed to the catalyst using Pt-ammine-carbonate, Pd nitrate, Rh nitrate, Cr nitrate or ammonium vanadate solutions as initial material. The used absorption methods were based on the filling of pores with the desired solution or on the chemisorption-type adhesion of the active component onto the surface of the support agent. With these methods the active components were dispersed as small particles to the surface of the catalyst. After the absorption the catalyst was dried in approximately 80 - 300 °C and calcined in air. A honeycombed sample was obtained by wrapping together a smooth and a cockled coated foil. The specific area of the active support agent with different samples was approximately 50 - 300 m²/g after the preparation. The amount of support agent on the surface of metal foil was approximately 40 - 60 m²/g or 150 - 230 g/L in the cell.

The catalysts' activeness was tested in laboratory conditions, simulating effluent gases, which comprise chlorinated hydrocarbons, water and air. There is usually not very much water present in natural effluent gases, but it was fed with the objective of promoting catalytic reactions. The composition of the laboratory reactor's feed was adjusted by computer-controlled mass flow regulators, and the composition was analysed by continuous FTIR analysers, with which it was possible to separate different hydrocarbons and reaction products from each other. In some tests the feed gases comprised bromated hydrocarbons or dimethylformamide (DMF). The conditions in the measurement of activeness by laboratory equipment were the following.

### Example 1

The oxidation of DCM and PCE was tested in a laboratory reactor test in two separate tests, in which these compounds were fed individually to the reactor together with oxygen and water (Tables 2-3). By adding both V and Cr to the catalyst it was possible to increase activeness especially in relation to PCE (tests 1-6, not according to the invention). Without active base metal elements it was not possible to achieve the desired activeness even by increasing the noble metal charge (test 12, not according to the invention). Increasing the charge to 250 g/cft PtPd (1:4) did not much improve the activity. A higher charge can have a positive effect in longer use. With Pt/Al₂O₃+0.5Cr+3.2V catalyst the increase of the Pt charge from 50 to 90 g/cft promoted the oxidation of PCE (tests 6 and 11, not according to the invention).

### Example 2

Effluent gases do not often comprise large concentrations of water. As hydrocarbons become oxidised, fair amounts of water are naturally formed to the mixture. It was noted in the tests that water added to the gas to be purified began to improve the activity (0 → 3% water, tests 3, 6 and 8, 9, not according to the invention). By reducing the space velocity and by increasing the amount of water with a catalyst comprising Pt and PtPd, the ignition temperatures decreased (tests 8-9, 13-16, not according to the invention). Thus, when using such catalyst it is possible to add water to the mixture to be purified, and the size of the catalyst is planned in accordance with the desired operating temperature and conversion objective.

### Example 3

A catalyst comprising Cr and V is more active, if it also includes noble metals (test 19 vs. test 6, not according to the invention). PtRh/Al₂O₃ was very active to DCM, but very weak to PCE. By adding Cr and V, the ignition temperature for PCE could be decreased by 81 °C (tests 17 and 18, not according to the invention). Because Pt and PtRh catalysts were active in the removal of DCM, it is possible to use a catalyst combination in which at least one cell comprises only noble metals and a second cell comprises also V and Cr or similar elements.

### Example 4

Without noble metals TiO₂+Cr+V and TiO₂+Cr+V+W catalysts functioned well in relation to PCE, but the activeness for DCM was poor (tests 20 and 21). By adding Pt to these catalysts, it was possible to decrease the ignition temperature for DCM (test 22, not according to the invention and 23, according to the invention). An especially low ignition temperature for PCE (330 °C) could be reached with 50Pt/Al₂O₃+Cr+V+W catalyst, which temperature is approximately 200 °C lower than with the known C-VOC catalysts. When using a catalyst comprising W, the ignition temperature for DCM was 400 °C so it can be deducted that good DCM and PCE removal activities can be achieved by combining it to successive cells with, for example, Pt/Al₂O₃, PtRh/Al₂O₃ or a similar oxidation catalyst.

### Example 5

A catalyst (50Pt/Al₂O₃-0.5Cr-3.2V) removed efficiently dimethylformamide (DMF) when the T₅₀ value was 227 °C (space velocity 28,000 h⁻³ and 0.47 ml/h DMF, no water). With such catalyst it is thus possible to efficiently remove also nitrogen-comprising hydrocarbon derivatives. The catalyst can also be used for the catalytic removal of hydrocarbon compounds or hydrocarbons comprising other functional groups (comprising oxygen, sulphur and nitrogen, different C-H bonds) from effluent gases.

### Example 6

Catalysts were also prepared in versions, which comprised no V. The catalysts had a high WO₃ concentration (26%), and especially the DCM conversions were low. With the catalyst 40 g/cft Pt/TiO2+26WO₃, T₅₀ for DCM was 299 °C. When still 0.5% Cr or 3% Fe was added to the same base, the ignition temperatures for DCM were 255 and 276 °C. In these samples the aperture number was 600 cpsi, when there was slightly more support agent than in the cells of 500 cpsi, but nevertheless, the difference in relation to the support agent amount was not significant. The Pt charge was only 40 g/cft (1.41 g/L) so that low ignition temperatures could be reached in the catalysts of the example without vanadium, with a lower amount of expensive Pt and even without Cr. However, a distinct improvement could be achieved with Cr to PCE conversions. In the tests 20-24 it is also seen how TiO₂ has an advantageous effect as the main component for the support agent compared, for example, with Al₂O₃.

### Example 7

Catalysts described here (not according to the invention) were used in the purification of diesel exhaust gas (simulation mixture: 1500 ppm CO, 80 ppm propene, 15 ppm toluene, 15 ppm decane, 14% oxygen, 6% CO₂, 25 ppm SO₂, and the balance nitrogen (space velocity 30,000)). The samples were aged hydrothermally in 700 °C for 20 hours and sulphurated for 1 hour in 420 °C in exhaust gas containing 50 ppm SO₂. After sulphurisation the catalyst no longer aggregated sulphur. With the sulphurisation it was ensured that the catalyst does not absorb sulphur in the ignition run, but the test conditions correspond to the normal situation with a catalyst that has been in use for a slightly longer period. An ignition run was performed with a sulphurised sample using the mixture mentioned above. The formation of sulphate can be examined on the basis of the SO₂ conversion. SO₂ becomes oxidised to SO₃ especially in an oxidation catalyst comprising Pt, which further reacts into sulphates in the presence of water. When in common oxidation catalysts the SO₂ conversion is easily over 60 - 70% after the ignition temperature, with a sample comprising V and W (20Pt/TiO₂+16SiO₂+1.9V+13WO₃) the maximum level of 27% remained at 250 °C and on average below 5% between 100 - 450 °C in an ignition test. At the same time, the CO ignition temperature was 160 °C and the HC ignition temperature 228 °C so that sulphurisation and the presence of sulphur in exhaust gas does not prevent desired reactions. A relatively low Pt charge is also essential to keep the oxidation of SO₂ and the formation of sulphates low. Such a catalyst is suitable for the purification of exhaust gases in motors using fuels with a high sulphur concentration (CO, HC, particles). When the formation of sulphates has been minimised, the mass of particles can be reduced by such catalysts, because the volatile part of particles becomes partly oxidised in the catalyst. In these subjects it is possible to use the above described catalyst or catalysts, which do not comprise at all V, but the 1. or 2. additive and one or several noble metals.

The catalyst 70Pt/TiO₂+13SiO₂+27Al₂O₂+3WO₃ was sulphurised and aged in the same way as the catalyst mentioned above, but it was tested in a different mixture (500 ppm CO, 200 ppm NO, 160 ppm propene, 12% oxygen, 6% water and 6% CO₂, 25 ppm SO₂ and the balance nitrogen (space velocity 50,000 h⁻¹)). The catalyst resisted well the influence of sulphur, and the CO ignition temperature was 155 °C and the HC ignition temperature 186 °C (T₅₀).

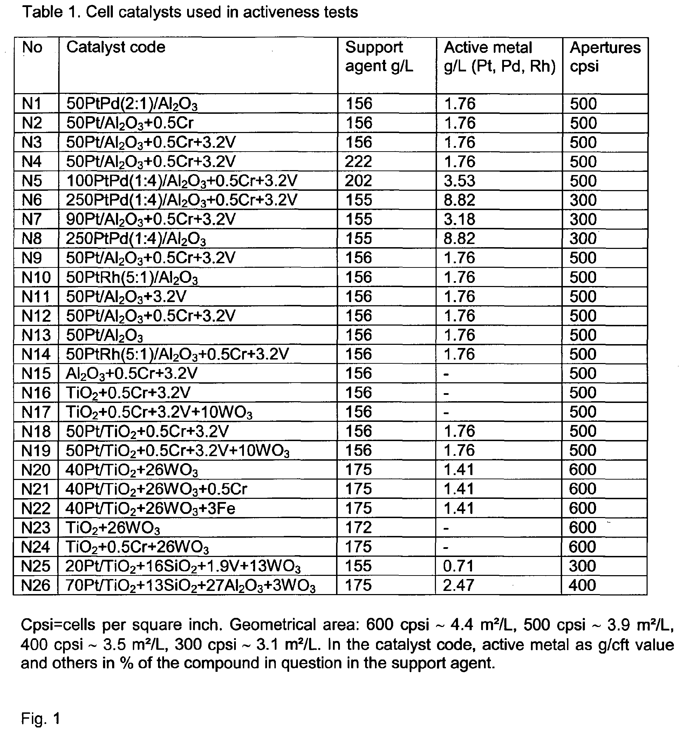

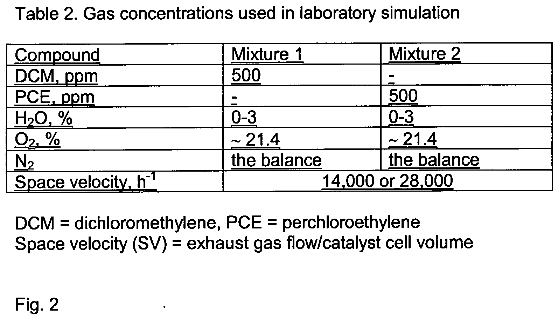

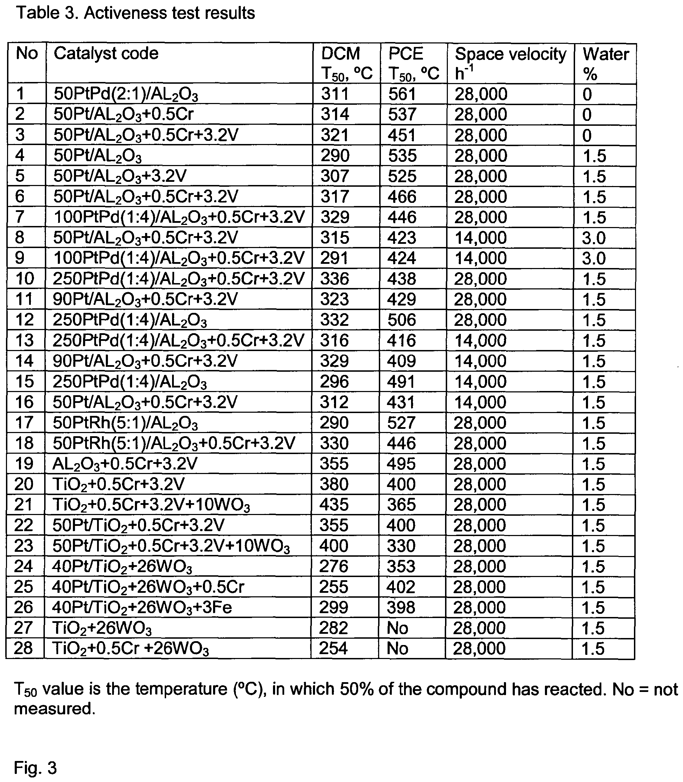

## Claims

1. Catalyst for removal of halogenated and non-halogenated hydrocarbons in effluent and process gases said catalyst comprising a porous support material which is aluminium, silicon, titanium or zirconium oxide or zeolite or a mixture of these and the amount of support material is 10 - 600 g/dm³_{catalyst structure}, **characterised in that** on the surface of which support material there are:
- one or several noble metals chosen from the group of Pt, Pd, Rh, Ru and/or Ir having total concentration 0.5 - 3%, in the support material; and
- V having total concentration 1 - 5% in the support material; and
- one 1. additive, which is Cr having total concentration in the support material 0.1 - 2%; and
- one 2. additive, which is W having total concentration in the support material 1 - 35%.

2. Catalyst according to claim 1, **characterised in that** the catalyst structure is a honeycombed structure or structure for mixing consisting of straight or curved flow channels and made of metal, ceramics, the catalyst material itself or a mixture of these.

3. Catalyst according to claim 1 or 2, **characterised in that** the catalyst has been added to the catalyst structure, in which there are channels between the walls, the hydraulic diameter of the channels or the average distance of the walls from each other being 0.1 - 20 mm.

4. Method for the manufacture of a catalyst for the removal of halogenated and non-halogenated hydrocarbons in effluent and process gases, wherein a porous support material which is aluminium, silicon, titanium or zirconium oxide or zeolite or a mixture of these and the amount of said support material is 10 - 600 g/dm³_{catalyst stucture}, is arranged to the catalyst, to the surface of which is added :
- one or several noble metals chosen from the group of Pt, Pd, Rh, Ru and/or Ir having total concentration 0.5 - 3%, in the support material; and
- V having total concentration 1 - 5% in the support material; and
- one 1. additive, which is Cr, having total concentration in the support material 0.1 - 2%; and
- one 2. additive, which is W, having total concentration in the support material 1 - 35%.

5. Method according to claim 4, **characterised in that** the noble metal/metals, V and 1. additive are added to the support material so that the noble metal/metals are added to the support material before the adding of V and the 1. additive is added to the support material after the adding of V.

6. Method according to claim 4 or 5, **characterised in that** vanadium is added to the catalyst from a solution comprising oxalic acid.

7. Method for the removal of halogenated and non-halogenated hydrocarbons in effluent and process gases, **characterised in that** effluent and process gases are treated with the catalyst according to claims 1 - 3.

8. Method according to claim 7, **characterised in that** the catalyst is used in a unidirectional or reverse flow reactor.

9. Method according to claim 7 or 8, **characterised in that** more than one heat exchanger structures are used with the catalyst.

10. Method according to any one of claims 7 - 9, **characterised in that** more than one heat exchanger structure and reverse flow reactors are used with the catalyst.

11. Method according to any one of claims 7 - 10, **characterised in that** water, vapour, air or oxygen is fed to the reactor.

## Patentansprüche

1. Katalysator zur Entfernung von in Abgasen und Prozessgasen enthaltenen halogenierten und nicht halogenierten Kohlenwasserstoffen, wobei der Katalysator ein poröses Trägermaterial umfasst, bei dem es sich um Aluminium-, Silicium-, Titan- oder Zirconiumoxid oder Zeolith oder um ein Gemisch daraus handelt, und die Menge an Trägermaterial 10-600 g/dm³_{Katalysatorstruktur} beträgt, **dadurch gekennzeichnet, dass** sich auf der Oberfläche des Trägermaterials
- ein oder mehrere Edelmetalle, die aus der Gruppe Pt, Pd, Rh, Ru und/oder Ir ausgewählt sind, mit einer Gesamtkonzentration im Trägermaterial von 0,5-3%, und
- V, mit einer Gesamtkonzentration im Trägermaterial von 1-5 %, und
- ein 1. Additiv, bei dem es sich um Cr handelt, mit einer Gesamtkonzentration im Trägermaterial von 0,1-2 %, und
- ein 2. Additiv, bei dem es sich um W handelt, mit einer Gesamtkonzentration im Trägermaterial von 1-35 %
befinden.

2. Katalysator nach Anspruch 1, **dadurch gekennzeichnet, dass** die Katalysatorstruktur eine Wabenstruktur oder Mischstruktur ist, die aus geraden oder gekrümmten Strömungskanälen besteht und aus Metall, Keramik, dem Katalysatormaterial selbst oder einem Gemisch aus diesen hergestellt ist.

3. Katalysator nach Anspruch 1 oder 2, **dadurch gekennzeichnet, dass** der Katalysator der Katalysatorstruktur hinzugefügt worden ist, in welcher sich zwischen den Wänden Kanäle befinden, wobei der hydraulische Durchmesser der Kanäle oder der durchschnittliche Abstand der Wände zueinander 0,1 - 20 mm beträgt.

4. Verfahren zur Herstellung eines Katalysators zur Entfernung von in Abgasen und Prozessgasen enthaltenen halogenierten und nicht halogenierten Kohlenwasserstoffen, wobei ein poröses Trägermaterial, bei welchem es sich um Aluminium-, Silicium-, Titan- oder Zirconiumoxid oder Zeolith oder um ein Gemisch daraus handelt und dessen Menge 10-600 g/dm³_{Katalysatorstruktur} beträgt, zu dem Katalysator angeordnet wird, auf dessen Oberfläche
- ein oder mehrere Edelmetalle, die aus der Gruppe Pt, Pd, Rh, Ru und/oder Ir ausgewählt sind, mit einer Gesamtkonzentration im Trägermaterial von 0,5-3%, und
- V, mit einer Gesamtkonzentration im Trägermaterial von 1-5 %, und
- ein 1. Additiv, bei dem es sich um Cr handelt, mit einer Gesamtkonzentration im Trägermaterial von 0,1-2 %, und
- ein 2. Additiv, bei dem es sich um W handelt, mit einer Gesamtkonzentration im Trägermaterial von 1-35 %
hinzugefügt werden.

5. Verfahren nach Anspruch 4, **dadurch gekennzeichnet, dass** das Edelmetall/die Edelmetalle, V und das 1. Additiv dem Trägermaterial derart hinzugefügt werden, dass das Edelmetall/die Edelmetalle dem Trägermaterial vor der Zugabe von V hinzugefügt werden und das 1. Additiv dem Trägermaterial nach der Zugabe von V hinzugefügt wird.

6. Verfahren nach Anspruch 4 oder 5, **dadurch gekennzeichnet, dass** das Vanadium aus einer Oxalsäure enthaltenden Lösung hinzugefügt wird.

7. Verfahren zur Entfernung von in Abgasen und Prozessgasen enthaltenen halogenierten und nicht halogenierten Kohlenwasserstoffen, **dadurch gekennzeichnet, dass** die Abgase und Prozessgase mit dem Katalysator nach den Ansprüchen 1-3 behandelt werden.

8. Verfahren nach Anspruch 7, **dadurch gekennzeichnet, dass** der Katalysator in einem Gleichstrom- oder Gegenstromreaktor eingesetzt wird.

9. Verfahren nach Anspruch 7 oder 8, **dadurch gekennzeichnet, dass** zusammen mit dem Katalysator mehr als eine Wärmetauscherstruktur verwendet wird.

10. Verfahren nach einem der Ansprüche 7 bis 9, **dadurch gekennzeichnet, dass** zusammen mit dem Katalysator mehr als eine Wärmetauscherstruktur und mehr als ein Gegenstromreaktor verwendet wird.

11. Verfahren nach einem der Ansprüche 7 bis 10, **dadurch gekennzeichnet, dass** dem Reaktor Wasser, Dampf, Luft oder Sauerstoff zugeführt wird.

## Revendications

1. Catalyseur pour l'élimination d'hydrocarbures halogénés et non halogénés dans des effluents et des gaz de procédé, ledit catalyseur comprenant un matériau support poreux qui est un oxyde d'aluminium, de silicium, de titane ou de zirconium ou une zéolite ou un mélange de ceux-ci et la quantité du matériau support est de 10 à 600 g/dm³_{struture du catalyseur}, **caractérisé en ce que** sur la surface dudit matériau support, il y a :
- un ou plusieurs métaux nobles choisis dans le groupe de Pt, Pd, Rh, Ru et/ou Ir à une concentration totale de 0,5 - 3 % , dans le matériau support; et
- V à une concentration totale de 1 - 5 % dans le matériau support; et
- un 1^{er} additif, qui est Cr ayant une concentration totale dans le matériau support de 0,1 - 2 % ; et
- un 2^{ème} additif, qui est W ayant une concentration totale dans le matériau support de 1 - 35 %.

2. Catalyseur selon la revendication 1, **caractérisé en ce que** la structure du catalyseur est une structure en nid d'abeilles ou une structure pour un mélange consistant en des canaux d'écoulement droits ou incurvés et faite de métal, de céramique, du matériau du catalyseur lui-même, ou d'un mélange de ceux-ci.

3. Catalyseur selon la revendication 1 ou 2, **caractérisé en ce que** le catalyseur a été ajouté à la structure du catalyseur, dans laquelle il y a des canaux entre les parois, le diamètre hydraulique des canaux ou la distance moyenne des parois les unes par rapport aux autres étant de 0,1 - 20 mm.

4. Procédé de fabrication d'un catalyseur pour l'élimination d'hydrocarbures halogénés et non halogénés dans des effluents et des gaz de procédé, dans lequel un matériau support poreux qui est un oxyde d'aluminium, de silicium, de titane ou de zirconium ou une zéolite ou un mélange de ceux-ci et dont la quantité dudit matériau support est de 10 à 600 g/dm³_{structure du catalyseur}, est agencé sur le catalyseur, sur la surface duquel sont ajoutés :
- un ou plusieurs métaux nobles choisis dans le groupe constitué par Pt, Pd, Rh, Ru et/ou Ir à une concentration totale de 0,5 - 3 %, dans le matériau support; et
- V à une concentration totale de 1 - 5 % dans le matériau support; et
- un 1^{er} additif, qui est Cr, ayant une concentration totale dans le matériau support de 0,1 - 2 % ; et
- un 2^{ème} additif, qui est W, ayant une concentration totale dans le matériau support de 1 - 35 %.

5. Procédé selon la revendication 4, **caractérisé en ce que** le métal/métaux nobles, V et le 1^{er} additif sont ajoutés au matériau support de sorte que le métal/métaux nobles soient ajoutés au matériau support avant l'ajout de V et le 1^{er} additif est ajouté au matériau support après l'ajout de V.

6. Procédé selon la revendication 4 ou 5, **caractérisé en ce que** du vanadium est ajouté au catalyseur à partir d'une solution comprenant de l'acide oxalique.

7. Procédé pour l'élimination d'hydrocarbures halogénés et non halogénés des effluents et des gaz de procédé, **caractérisé en ce que** l'effluent et les gaz de procédé sont traités avec le catalyseur selon les revendications 1 - 3.

8. Procédé selon la revendication 7, **caractérisé en ce que** le catalyseur est utilisé dans un réacteur à écoulement unidirectionnel ou inverse.

9. Procédé selon la revendication 7 ou 8, **caractérisé en ce que** plus qu'une structure d'échangeur thermique est utilisée avec le catalyseur.

10. Procédé selon l'une quelconque des revendications 7 - 9, **caractérisé en ce que** plus qu'une structure d'échangeur thermique et réacteur à écoulement inverse sont utilisés avec le catalyseur.

11. Procédé selon l'une quelconque des revendications 7 - 10, **caractérisé en ce que** de l'eau, de la vapeur, de l'air ou de l'oxygène est alimenté(e) au réacteur.
